# EUROPEAN PATENT SPECIFICATION

(11) **EP 2 246 287 B1**
(45) Date of publication and mention of the grant of the patent: **25.01.2017**
(21) Application number: 10160793.5
(22) Date of filing: 22.04.2010
(51) Int. Cl.: B66C 15/06, B66C 17/04, G05B 23/02, G06Q 10/00

(54) **A Process for Detecting and Using Data concerning Safety Conditions of Cable or Chain Lifting Apparatus and a Relative Device**
Verfahren zur Detektion und Verwendung von Daten bezüglich Sicherheitsbedingungen einer Kabel- oder Kettenhubvorrichtung sowie zugehörige Vorrichtung
Procédé pour détecter et utiliser des données concernant des conditions de sécurité d'un appareil de levage par câble ou par chaîne et dispositif correspondant

(30) Priority: 27.04.2009 IT MI20090708
(43) Date of publication of application: 03.11.2010
(73) Proprietor: VINATI S.R.L., 25075 Nave (BS) (IT)
(72) Inventor: Vinati, Felice, 25075, NAVE (BRESCIA) (IT); Vinati, Giacomo, 25075, NAVE (BRESCIA) (IT); Vinati, Matteo, 25075, NAVE (BRESCIA) (IT); Vinati, Mariachiara, 25075, NAVE (BRESCIA) (IT); Vinati, Samuele, 25075, NAVE (BRESCIA) (IT)
(74) Representative: Parisi, Luigi

(56) References cited:
- DE-A1-102005 023 252
- IT-A1- MI20 080 901
- US-A1- 2006 008 341
- MIDDENDORF A ET AL: "Embedded life-cycle information module for monitoring and identification of product use conditions" ENVIRONMENTALLY CONSCIOUS DESIGN AND INVERSE MANUFACTURING, 2003. ECOD ESIGN '03. 2003 3RD INTERNATIONAL SYMPOSIUM ON TOKYO, JAPAN DEC. 8-11, 2003, PISCATAWAY, NJ, USA,IEEE, 8 December 2003 (2003-12-08) , pages 733-740, XP010715950 ISBN: 978-0-7803-8590-0
- A. MIDDENDORF, H. PÖTTER, N-F. NISSEN: "Modulare Mikrosysteme für miniaturisierte Lebensdatenschreiber-Ergebnisse des industriellen Verbindungsprojektes Entwicklung eines Modularen Mikrosystems zur Abschätzung des technischen Zustandes gebrauchter Produkte -LIM-" INFOBÖRSE MIKROSYSTEMTECHNIK, [Online] no. 49, 2004, XP002561935 Retrieved from the Internet: URL:http://www.mstonline.de/publikationen/ download/ib49.pdf> [retrieved on 2010-01-05]

## Description

The invention concerns a process for managing the safety conditions of cable or chain lifting equipment, such as overhead cranes, cranes for construction work, truck-mounted cranes and chain or hydraulic or similar apparatus, which lift and move loads.

As is known, overhead cranes are machines which are designed to raise and move materials and goods, both outdoors and indoors, and they are generally constituted by a bridge, which is mobile in a horizontal direction along a pair of rails or runners and provided with a cross-beam upon which a hoist is mounted, the hoist moving horizontally along the beam and to which hoist a pulley, provided with a hook for attaching to and lifting objects, is connected.

One or more cables are attached to the hoist, which enable loads to be raised and moved by a system of pulleys, return pulleys and hooks.

The main problem with the use of equipment of this type, and in general with cable or chain lifting apparatus, is to ensure the complete safety of operators when the apparatus is being used, considering the extremely heavy weights which need to be moved.

The device described in the patent application M12008A000901 obviates these drawbacks.

Document US 2006/0008341 discloses a method for collecting and viewing inspection report data relating to lifting apparatuses.

These data are collected by an inspector that visits the site of a lifting apparatus and compiles an inspection report of a lifting device.

A user may have access to a database of reports by means of a remote computer connection and selectively sort and view the report data for the lifting devices used at a particular site. The user may choose from a plurality of options to view report data.

The safety device for lifting equipment exhibits means for detecting every movement of the load holding element, which means comprise a group of accelerometers, each of which can calculate the movement of the load holding element on a respective Cartesian coordinate system, and means for processing such data in function of the time of use of the lifting apparatus. However, despite the fact that an overhead crane is a lifting apparatus subject to specific constructional regulations, and to regulations relating to periodical checks, the following technical drawbacks, which are substantially linked to the safety of the operators using the apparatus, remain unsolved.

In the first place, lifting equipment maintenance is complicated and expensive because many of the data which a maintenance worker needs in order to carry out the operations which are his/her responsibility are not available in an integrated form.

A further drawback is that customers using lifting equipment generally do not avail of a system which promptly displays all the data connected with lifting equipment safety, for calculating legally-required parameters, or the historical data of the events concerning a particular lifting apparatus.

The aim of the invention is therefore to increase safety levels in the use of lifting equipment, thus allowing maintenance personnel of this type of equipment, referred to herein below also as Technical Customers, to obtain and store data concerning every significant event regarding lifting plants.

A further aim of the invention is make it possible to transmit the data to a central web processing application and to determine the correct Safety Work Period (SWP), better known as the remaining useful working-life of the equipment. Knowing this datum is fundamental in preventing serious safety problems due to excessive or unmonitored use of a firm's plant, or use thereof which does not in any case comply with legal regulations defining the correct way of calculating and gathering this item of data.

A further aim of the invention is to significantly improve the in-use safety of cable lifting equipment in a rational, reliable and relatively inexpensive way. The aims of the invention are achieved thanks to a process for detecting and using data concerning safety conditions of a plurality of cable or chain or hydraulic lifting apparatuses, or a combination thereof, each apparatus comprising a mobile hoist or other lifting system, to which a load holding element is connected, via a system of cables, the process comprising at least following stages:
- creating a remote server based system for managing a database with data concerning each apparatus and each owner thereof,
- detecting, by means of an accelerometer event recording system arranged on board of each lifting apparatus, data relating to movements of a load-holding element on at least an axis of a system of Cartesian coordinates (x,y,z) and/or data relating to single events or to archive-recorded series of lifting apparatus events,
- processing the data and sending the data to a remote server,
- allowing a protected access through the Internet to the remote server's database by the owner of the respective apparatus,
- processing the data in order to calculate a working-life of each lifting apparatus (SWP),
- using the capability to both upload and download data via Internet of the accelerometer event recording system
- adjusting through the Internet the preferences and settings of the accelerometer event recording system, and
- if required, generating one or more alarm signals and/or signals to halt a lifting apparatus if certain conditions relating to the working-life of the apparatus or to other events, and relevant to safety, are detected.

Among the advantages of the invention is that it is possible to obtain information directly from the lifting equipment, an absolute novelty which will consequently reduce the number of lives lost in the workplace through insufficient awareness, and insufficient acceptance of responsibility by operators and customers, but also due to information gaps which the prior art has exhibited up to now.

Further characteristics can be inferred from the dependent claims.

Further characteristics and advantages of the invention will emerge from the following detailed description, which is provided as a non-limiting example, with the aid of the appended figures of the drawings, in which:
- figure 1 is a schematic view of the main functions of the integrated safety device of the invention:
- figure 2 shows the information flows in the system of the invention in greater detail;

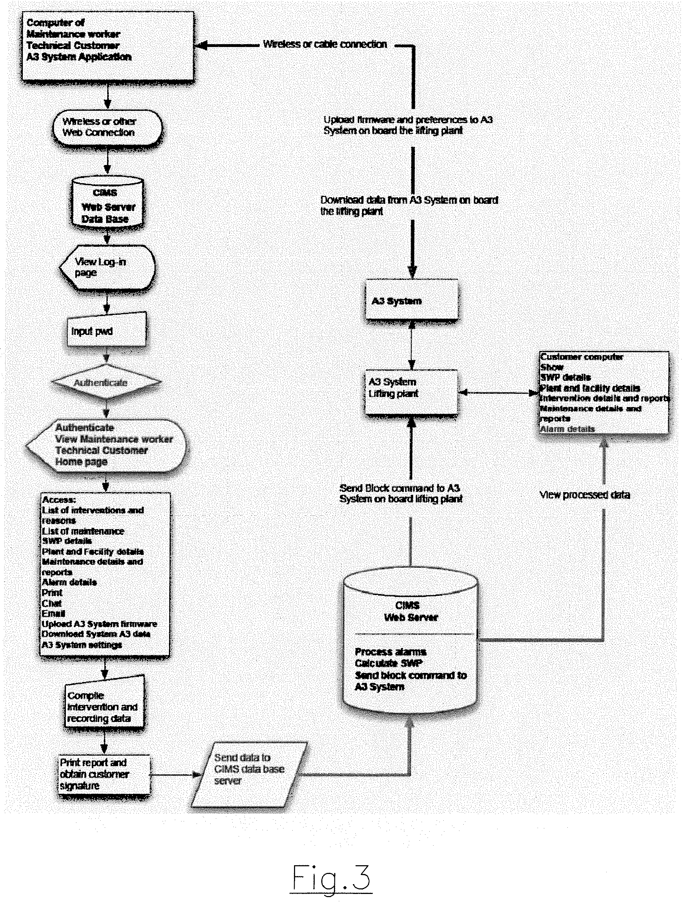

- figure 3 shows a block diagram relating to the flow of information involving the maintenance worker in the invention; and

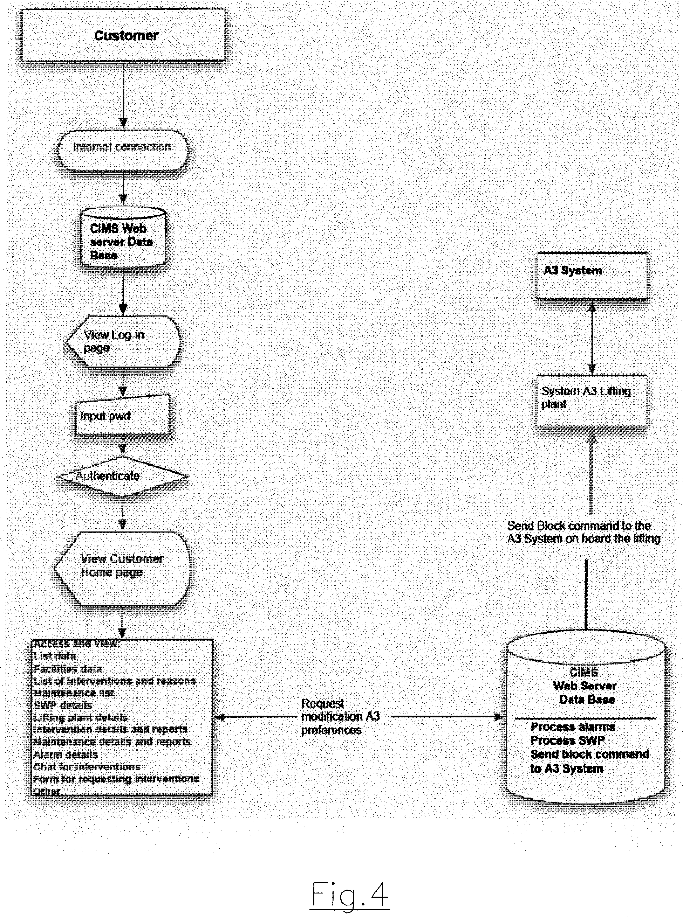

- figure 4 is a flow chart relative to the flow of information involving the customer in the invention.

The figures show the integrated safety device for cable or chain lifting apparatus of the invention.

The following description assumes that there is a group of accelerometers on board the lifting apparatus, each accelerometer being capable of detecting the movement of the load holding element in relation to a respective axis of a Cartesian coordinate system (x,y,z), and means for processing the data obtained from the accelerometers.

For the sake of simplicity of explanation, the system will be referred to conventionally herein as the **A³** event recording system.

More in detail, the system is an accelerometer system which is capable of detecting and providing full information on events such as: cable inclination, time of use, conditions of use, wire strand breakage in cables, event storage, unguarded load, determination of loads lifted, lifting equipment operating environment temperature and other data, with a capability to both upload and download data via internet or mobile telephone systems (text messages and so on).

The **A³** system can also check the correct angle of traction of the cable and of the hook during the lifting stage, generate visible and audible alarm signals, and block the lifting equipment if prior alarms are violated or ignored. Further, the entire historic series of detectable events is stored.

The following terminological definitions are useful in understanding the description and drawings:
**Cranes Integrated Management Services (CIMS):** Web application for integrated management of lifting equipment services, the functions of which will be described in greater detail herein below.
**SuperAdmin:** CIMS system manager.
CIMS Data Base: the server where all the data regarding the CIMS are stored.
**Users:** the individuals, production and/or maintenance firms wishing to use the CIMS to manage and/or maintain lifting equipment.
**Admin:** Users who have access to the CIMS system and to management of their Customers, Maintenance workers etc.
**Customers:** they are the Customers of Users; Customers are therefore those in possession of Lifting Equipment for which the User uses the CIMS system for the relative management and/or maintenance.
**Maintenance workers/Technical Customers:** technicians who carry out maintenance work on Customers' Lifting equipment. They are created by Users.
**Safety Work Period (SWP):** defines the theoretical lifetime of plants calculated on the basis of instrumental parameters obtained by the **A³** event recording system and other parameters entered into the CIMS by Technical Customers and deriving both from visual inspection and documentary analysis. The CIMS uses its algorithm, which complies with the relevant legislation at present in force, to process the data in order to obtain not only the Theoretical Plant Lifetime, the Consumed Working-life and the Remaining Working-life, but also constantly to determine other variable technical parameters over time, such as the Class and Lifting plant Conditions of Use.
**Alarms:** they can be instrumental, that is, events detected instrumentally by the **A³** event recording system which identify risks to safety, or scheduled, that is, those entered into the system by the back office and which keep track of all manufacturer-scheduled interventions on lifting equipment.
**Computers/PDAs:** these are the data processing means in the possession of Maintenance workers/Technical customers and which are capable of connecting both to the CIMS database and to the **A³** event recording system for the operations and actions contemplated by the CIMS system.

The invention includes implementing a process for detecting and using data connected to the safety of a lifting apparatus, which process comprises detecting the movements of the load holding element on at least an axis of a system of Cartesian coordinates (x,y,z). Preferably however movements are plotted on all three axes of the system Cartesian coordinates (x,y,z).

The data may be processed on site, or preferably sent to a remote server, in particular in order to process the data to calculate the remaining plant life (SWP) and other parameters required by the legislation at present in force. One or more alarm and/or block lifting plant signals can be generated if conditions arise which depend on the remaining plant working-life or on other user-settable parameters, for example in order to comply with safety regulations or for other reasons.

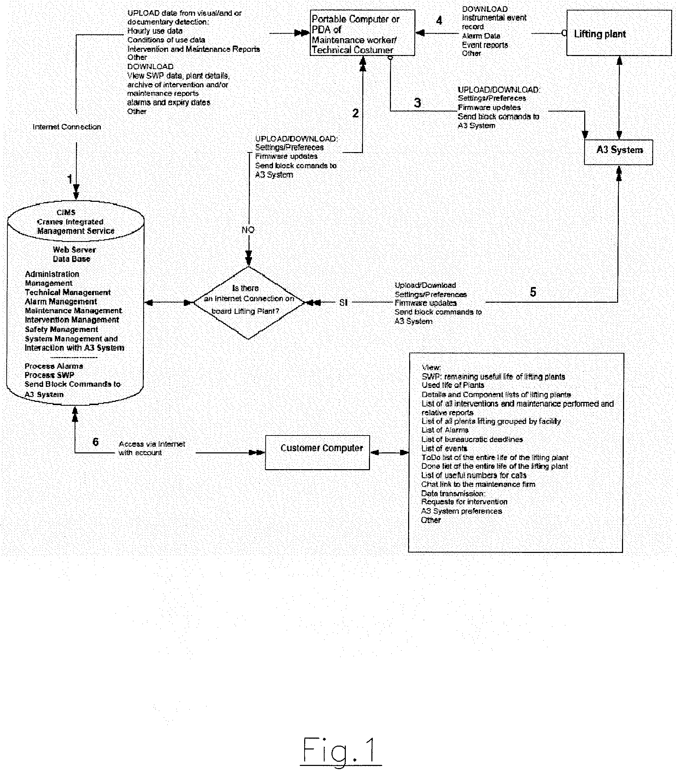

As can be seen from figure 1, even if the **A³** event recording system is provided with the option of a direct Internet connection, it can send only the instrumental data recorded (figure 1 point 5).

As an alternative, a computer or PDA in the possession of the maintenance worker is used as a bridge for transmitting both instrumentally-detected data, and data from the inspection performed by the maintenance worker and entered manually in the computer or PDA, which data the maintenance worker can record visually or documentarily.

This enables precise definition of lifting equipment status and conditions of use, and correct definition of the parameters required by the algorithm to calculate the SWP or Safety Work Period, that is to say, the theoretical lifetime of the lifting equipment, its remaining use life, expressed in hours or another parameter, and its used life expressed in hours or other parameter. This possibility also gives rise to the generation of alarms which, based on the data supplied by the instrument systems on board the lifting apparatus or the data entered by Maintenance workers/Technical customers after a visual or documentary inspection, are generated by the CIMS application and sent to the Customer (owner or user of the lifting equipment), to Maintenance workers/Technical Customers, to the User (maintenance firm, builder or other) and to the **A³** system for the consequent alarm or stop system operations.

The alarms generated and processed by the CIMS application resident on the server generate a warning which is sent to the customer and to the maintenance firm and, if the system of connection to the A³ network is on board, the alarm transmitted generates either a system arrest or the appropriate audible and/or visible alarms.

As the customer can view with protected access all the lifting plants which are the object of maintenance and check the remaining working-life (Remaining Use expressed in hours) he/she is made actively responsible for the correct use and handling of plants.

Thus the application introduces an absolutely novel element to the safety sector, that is, immediate and comprehensible determination of the SWP and thus of the working-life expectancy, spent use and residual use, the detection of all the events regarding lifting plants, together with the generation of alarms, the list of interventions indicated by maintenance workers/Technical customers and interventions performed, regulator deadlines and all other aspects relating to safe overall management of all lifting plants using the CIMS system.

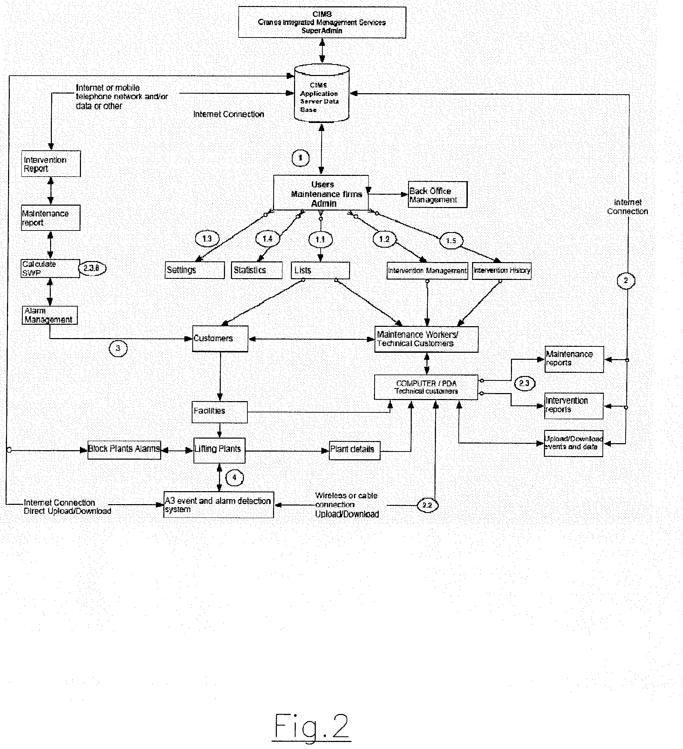

Figure 2 shows schematically but in greater detail the information flows in the CIMS system which are illustrated and explained herein below.

### Create account for Users - maintenance firms - SuperAdmin

The CIMS system manager (super Admin) can create access to the system for Users (production and/or maintenance firms) wishing to access the system with Admin privileges.
- Enter/modify/delete User List
- Enter/modify/delete access privileges - settings
- Enter/modify/delete financial and accounting data
- Enter/modify/delete administration data
- Each User can be assigned a maximum number of Customers which can be entered in the database
- Each User can be assigned a maximum number of Lifting plants which can be entered in the database

Admins have access to the following:

### Records and Lists

- Create/modify/delete Customer accounts; Maintenance workers/Technical Customers accounts
- Create/modify/delete all Customers and Maintenance workers/Technical customers data
- Define Customer access privileges
- Create/modify/delete Maintenance workers/Technical customers accounts
- Create/modify/delete all Maintenance workers/Technical customers data
- Define access privileges for Customers
- Create/modify/delete facilities where plants are located
- Create/modify/delete all plant technical data
- Create/modify/delete scheduled alarms, reason and expiry date for each single component of lifting plants
- Enter financial data relative to the financial aspects of maintenance and interventions, or in general to administration management
- Forward authorisation data for connecting to the CIMS application to Customers via e-mail or other mode of communication.

### Manage Interventions and Maintenance

- Set Intervention (date, reason, type of urgency etc.)
- Set maintenance (data, type of maintenance, periodicity)
- Assign maintenance to Maintenance workers/Technical customers who have been selected and entered into the CIMS
- Assign maintenance type and relative form (three-monthly, six-monthly, annual, general overhaul) to Maintenance workers/Technical customers who have been selected and entered into the CIMS
- Assign intervention type and reasons for intervention
- Assign urgency or start and end date
- Assign periodicity of maintenance
- Check maintenance status (Open - In Progress - Under compilation - Closed - Printing etc...)
- Possibility to change technician and transfer intervention or maintenance to other Maintenance workers/Technical customers
- Possibility to delete intervention and/or maintenance
- View intervention status
- Vary intervention status

### Settings and preferences

- Define maintenance forms (three-monthly, six-monthly, annual, general overhaul etc...)
- Define statistical lists
- Define analysis reports
- Other

### View statistics

- Possibility to view statistics made available by the CIMS

### Archived records of interventions and maintenance

- Possibility to view and access the archived records of interventions
- Possibility to view all intervention or maintenance reports in various formats

### Access to the CIMS web application from computer or PDA - Maintenance workers and technicians

### Access to Records

- View all Customer data
- View all technical information relative to a plant
- View facilities where equipments are located
- View financial data relative to the financial aspects of maintenance and interventions
- Enter names and data of maintenance workers/technicians
- Create accounts - Assign Passwords and access privileges to customers, maintenance workers, technicians, users etc...
- Forward authorisation data for connecting to the CIMS application

### Access to the A³ lifting equipment data recording system

Thanks to the presence of an event recording system such as **A³,** the system downloads the events using an application resident on the computer or PDA of the maintenance worker. The application then enters the recorded data via Internet and forwards the data to the CIMS server for processing and alarms.

### Recording intervention or maintenance reports

After accessing the application and logging in, a maintenance worker accesses his/her own Home Page where the Lifting plants assigned to him/her for maintenance are displayed, listed by Customer, facility and location, plant, serial number, internal company code number, type of maintenance to be performed, intervention code number, button for access to the data of the selected plant.

### Hours and travel data

- Record hours worked
- Record kilometres covered
- Record hours of travel

### Plant details

- View the main components of the lifting equipment, make, serial number and other technical data of use to a maintenance worker
- Separate recording of the technical data of the cables and the relative working-life record

### Maintenance intervention details

- Enter tasks to be done and press the ToDo button which generates compilation of ToDo List. Each time the ToDo button is pressed a new line is generated for a further ToDo item
- Enter general observations about equipment
- Enter documentary hours if system for recording hours is lacking on board the plant
- Enter documentary cycles if there is no system for recording cycles on board the plant

### Alarms

- Check alarms due to expire during maintenance (define time range of presentation)
- In this case too, the key "Done" is displayed, which besides changing the status of ToDo to Done, enters the description in the intervention report being compiled.

### A³ Alarms

Thanks to the presence of the event record system like A³, events which generate alarms are indicated and displayed to the maintenance worker. An example is the breakage of strands in the cable which the A³ system is capable of recording. Imagine for example that a particular type of cable accepts a maximum number of 8 broken strands. If during maintenance the maintenance worker sees that 7 broken strands are displayed, he/she can recommend that the cable be replaced. If instead the event of 8 strands breaking occurs between one maintenance operation and the next, the system will generate an alarm, calling the customer, the maintenance firm and possibly the CIMS via the internet or by sms text message, and if required, it will authorise **A³** to interrupt use of the plant. The **A³** system can also be authorised to take autonomous action.

### Details of intervention call

Maintenance differs from calls because calls correspond to non-scheduled activity which goes beyond normal maintenance. Calls therefore generate a separate report for subsequent invoicing and debiting costs to the customer. A call is generated by the back office or directly by the maintenance worker within the specific lifting plant which is undergoing maintenance. The maintenance worker can view the reason for the call, which may be the consequence of the ToDos which are indicated by the maintenance schedule, or an unexpected breakdown. The maintenance worker can record the interventions performed, either by describing them in the report, or if they are in the ToDo list, simply by pressing the "Done" key, which enters a description, the hours worked, the kilometres travelled and the travel time, in the intervention report being compiled.

### ToDo list

During maintenance the ToDo list is generated and is always visible and active with the "Done" button present, which changes the status of the event, recording it as done. The ToDo list contains:
- Progressive Number
- Intervention Code Number
- Date
- Description or cause
- "ToDo" column with red background colour
- "Done" column with green background colour
- "Done" button

Pressing the "Done" button, in addition to changing the status, enters the description in the intervention report being compiled.

### Calculate SWP

This is certainly the most innovative and important stage with respect to safety. The technical data of the plant, such as class and conditions of use associated to the hours or cycles recorded documentarily or instrumentally, enable exact calculation of the SWP. If event recording systems such as A³ are present, the hours and also the conditions of use are recorded by the instrumentation. This not only provides lifting plants with a maximum of safety in use, but also enables the increase or reduction in working-life expectation to be determined with precision ahead of a general overhaul.

### Print-outs

Plant reports, and a summary report for all plants undergoing maintenance are in both cases printed out for signing.

### Chat

Audio/video chat connections with the firm's back office are possible.

### Connection for User Customers

### Access limited to the web application

- Create account
- Define privileges

The access password allows the following to be viewed: individual customer data and relative administration and accounting data, lifting plants' technical data by location or facility, component list of each individual plant, calculation of the Safety Work Period (SWP), the alarms signalled and the events recorded.

Further, all the interventions and maintenance effected and relative reports can be viewed.

The ToDo List is a further innovation which enables all records of activities to be done and indicated by Maintenance workers for each individual plant to be viewed, together with the activities done, and those still to be done, which are highlighted in red.

The ToDo list tracks the entire lifetime of the plant, thus enabling the overall situation to be recorded. It is also possible to receive alarms and events.

### Connection between the CIMS and lifting plants via Internet or mobile telephone network

### Upload/Download data and events

The CIMS system connects to the **A³** event recording systems to upload/download data, firmware etc... The connection can be direct or via the Computer and/or PDA of Maintenance workers/Technical Customers. Clearly this possibility enables the CIMS to control the performance of lifting plants and intervene if safety norms are violated.

### Shut-down of plant due to alarms

Shut-down of lifting equipment because of alarm generated by the **A³** event recording system. It is sent via web and/or wireless or wimax or other connection system initiating from an appropriate instruction to the A³ event recording system.

### Updates for firmware and software, and A3 system preferences and settings.

The new software is sent via web and/or wireless or wimax or other connection system.

The invention allows the following advantageous possibilities:
Online technical and administrative management of lifting plants.
Online management of the calculation of the SWP of lifting plants.
Online recording of events and occurrences detected instrumentally by apparatus on board lifting plants.

Directly recording visually or documentarily recorded events and occurrences relating to lifting plants on portable computer or PDA via wireless or cable. Processing the events mentioned in the previous two paragraphs on a server to determine alarms related to the safety of lifting plants.

Processing on the events server of events either detected via the instrumentation or by direct detection on the part of the portable computer or PDA, whether wireless or via cable connection; the events or occurrences being visually detected for the determining of the Safety Work Period (SWP) and relating to the safety and theoretical working-life, the used-up component and the residual component of the lifting plants.

The algorithm for processing the events whether recorded instrumentally, or recorded directly on portable computer or PDA either wireless or via cable of visually recorded events and occurrences to determine the SWP Safety Work Period of lifting plants.

The possibility to perform and/or process the data downloaded from the event recording system on-board lifting plants, either directly on the portable computer or PDA belonging to the maintenance worker or other technician. The possibility to perform and/or process data, software and/or firmware uploaded from the event recording system on-board lifting plants, directly using the portable computer or PDA of the maintenance worker or other technician.

The possibility to perform and/or process and/or directly modify safety preferences (input settings) uploaded from the event recording system on - board lifting plants directly using the portable computer or PDA of the maintenance worker or other technician.

The possibility to directly connect the event recording system on-board lifting plants, and the remote server where the CIMS application is installed, directly via the Internet.

The possibility to connect the event recording system on-board lifting plants, and the remote server where the CIMS application is installed, via the Internet using portable computers, or PDAs, or other processing and data calculation tools in the possession of the maintenance worker or other technician, in the form of a connection bridge.

The possibility to forward instructions to the event recording system present on-board lifting plants via an Internet connection or a mobile telephone network in order to activate physical blocks to use of lifting plants - Stop lifting - Stop bridge advancement - Stop carriage advancement etc.

The possibility to forward instructions to activate acoustic alarms to the event recording system on board lifting plants, via Internet connection or mobile telephone network.

The possibility to forward instructions to the event recording system on board lifting plants to activate visible alarms (lights, display or the like), via Internet connection or mobile telephone network.

### Technicians or Maintenance workers (Technical customers)

The possibility to allow maintenance workers/Technical customers to connect to the CIMS application via portable computer or PDA or other data processing instrument to view the technical data of lifting plants.

The possibility to allow maintenance workers/Technical customers to connect to the CIMS application via portable computer or PDA or other data processing instruments to view the technical data of the Safety Work Period (SWP) of lifting plants.

The possibility to allow maintenance workers/Technical customers to connect to the CIMS application via portable computer or PDA or other data processing instruments in order to enter data relative to interventions and maintenance effected, and data relative to visual and/or documentary observations of lifting plants.

The possibility to allow maintenance workers/Technical customers to connect to the CIMS application via portable computer or PDA or other data processing instrument to view and input data relative to technical alarms to be effected on lifting plants.

The possibility to allow maintenance workers/Technical customers to connect to the CIMS application via portable computer or PDA or other data processing instruments in order to view the technical data relative to administrative and legally required alarms to be effected on lifting plants. The possibility to allow maintenance workers/Technical customers to connect via portable computer or PDA or other data processing instruments to the CIMS application to view the technical data relating to technical interventions to be effected on lifting plants.

The possibility to allow maintenance workers/Technical customers to connect via portable computer or PDA or other data processing instruments to the CIMS application to view technical data relative to ordinary and/or extraordinary scheduled maintenance to be effected on lifting plants.

The possibility to allow maintenance workers/Technical customers to connect to the CIMS application via portable computer or PDA or other data processing instrument to use the ToDo list, to view all the activities to be performed on lifting plants relating to the ToDo list; and the possibility to confirm the change of status from "ToDo" to "Done" by pressing the "Done" key, thus automatically entering the relative description in the intervention report.

The possibility to allow maintenance workers/Technical customers to connect to the CIMS application via portable computer or PDA or other data processing instrument to view the details of all assigned maintenance forms. The possibility to allow maintenance workers/Technical customers to connect to the CIMS application via portable computer or PDA or other data processing instruments to compile the technical maintenance reports and the relative observations relating to lifting plants in full technical detail and having the status of legal evidence.

The possibility to allow maintenance workers/Technical customers to connect to the CIMS application via portable computer or PDA or other data processing instruments to view and print the reports relative to scheduled ordinary and/or extraordinary maintenance to be effected on lifting plants in order to collect the signatures of the relative responsible persons.

The possibility to allow maintenance workers/Technical customers to connect to the CIMS application via portable computer or PDA or other data processing instruments to compile the technical intervention reports and the relative observations in full technical detail relating to lifting plants and having the status of legal evidence, thus modifying the component list of lifting plants.

The possibility to allow maintenance workers/Technical customers to connect to the CIMS application via portable computer or PDA or other data processing instruments to view and print reports relating to repair and/or modification or other interventions performed on lifting plants in order to proceed to collecting the signatures of the relative responsible persons.

The possibility to allow maintenance workers/Technical customers to connect to the CIMS application via portable computer or PDA or other data processing instruments to record the operating hours of lifting plants documentarily by inspection of the operating logbook. This modality modifies the SWP of lifting plants as a function of the algorithm defined in the CIMS. The possibility to enable maintenance workers/Technical customers to connect to the CIMS application via portable computer or PDA or other data processing instrument to record operating cycles of lifting plants documentarily by inspection of the operating logbook. This mode modifies the SWP of lifting plants in function of the algorithm defined in the CIMS.

The possibility to allow maintenance workers/Technical customers to connect via portable computer or PDA or other data processing instruments to the CIMS application to record unknown service of lifting plants in the absence of the operating logbook. This mode modifies the SWP of lifting plants as a function of the algorithm defined in the CIMS

The possibility to allow maintenance workers/Technical customers to connect to the CIMS application via portable computer or PDA or other data processing instruments to upload and/or download images and/or videos concerning lifting plants (for documentation and/or demonstration purposes).

### Customers

The possibility to allow Customers to connect to the CIMS application via computer to view all their lifting plants and relative details and the components which are the object of maintenance and/or interventions and are entered in the CIMS database.

The possibility to allow Customers to connect to the CIMS application via computer to view the SWP, the remaining working-life in hours or other data, the used-up working-life in hours or other data regarding all their lifting plants entered in the CIMS database.

The possibility to allow customers to connect to the CIMS application via computer to view all the maintenance reports regarding all their lifting plants entered in the CIMS database.

The possibility to allow customers to connect to the CIMS application via computer to view all the intervention reports on all their lifting plants entered in the CIMS database.

The possibility to allow customers to connect to the CIMS application via computer to view the ToDo list concerning their lifting plants entered in the CIMS database.

The possibility to allow Customers to connect to the CIMS application via computer to adjust the preferences or settings of the **A³** event recording systems installed on their lifting plants entered in the CIMS database.

The possibility to allow customers to connect to the CIMS application via computer to view all the alarm events generated by the **A³** event recording systems installed on their lifting plants entered in the CIMS database.

The possibility to allow customers to connect to the CIMS application via computer to use chat/email/forms or other means to request intervention or for any other reason.

The possibility to allow Customers to connect to the CIMS application via computer to analyse suggestions provided by the User or Maintenance Firm relative to their lifting plants which are entered in the CIMS database.

The possibility to allow Customers to connect to the CIMS application via computer to view all pre-compiled administration forms concerning all their lifting plants entered in the CIMS database, to download them, and/or automatically send them via email to the Competent Authorities.

The possibility to allow Customers to connect to the CIMS application via computer to display all the statistics relating to the use or other aspects concerning all their lifting plants which are entered in the CIMS database.

### Users

The possibility to allow CIMS system Users to connect to the CIMS application via computer to enter/modify/delete their Customer lists.

The possibility to authorise users of the CIMS system to connect to the CIMS application via computer to enter/modify/delete their Technician or Maintenance worker lists.

The possibility to authorise CIMS system Users to connect to the CIMS application via computer in order to authorise Technicians or Maintenance workers to connect to the CIMS system, by issuing the relative connection account (ID and password) to them.

The possibility to authorise CIMS system Users to connect to the CIMS application via computer to authorise Customers to connect to the CIMS system by issuing the relative connection account (ID and password) to them.

The possibility to authorise CIMS system Users to connect to the CIMS application via computer to enter/modify/delete the records and details of all the facilities of their Customers where lifting plants are located.

The possibility to enable Users of the CIMS system to connect to the CIMS application via computer to enter/modify/delete the records, technical details and component lists, Class, conditions of use and any other detail required by the system and concerning all the lifting plants of the User.

The possibility to enable Users of the CIMS system to connect to the CIMS application via computer to enter/modify/delete preferences or anything else concerning all the lifting plants of the User.

The possibility to enable Users of the CIMS system to connect to the CIMS application via computer to view all the statistics and/or other analyses concerning all the lifting plants of all Customers or of individual customers.

The possibility to allow Users of the CIMS system to connect to the CIMS application via computer to enter/modify/delete all administration data and/or accounting and contract data concerning all the lifting plants of all Customers or individual Customers.

### CIMS Application

The possibility to allow the CIMS system to calculate the conditions of use with an hourly, daily, weekly, monthly, three-monthly, annual or multiple time frequency and consequently to define the relative class of use of lifting plants. As a consequence this produces a variability in the determination of the theoretical working-life of the lifting equipments which may be longer - in the case of less heavy conditions of use compared with those provided for during the construction stage - or shorter under heavier conditions of use than those provided for during the construction stage.

The possibility of the CIMS system to connect to the **A³** event recording system to define settings and preferences via Internet, directly or using as a bridge or node the portable computer or PDA or other means of the Technician or Maintenance worker (Technical Customer).

The possibility of the CIMS system to connect to the **A³** event recording system to update firmware and/or software via Internet, directly or using, as a bridge or node, the portable computer or PDA or other means of the Technician or Maintenance worker (Technical Customer).

The possibility of the CIMS system to connect to the **A³** event recording system for all the download or upload operations necessary to determine the SWP and all the other functions of the CIMS system by Internet, directly or using as a bridge or node the portable computer or PDA or other means of the Technician or Maintenance worker (Technical Customer).

The possibility of the CIMS system to connect to the **A³** event recording system via the Internet, directly or using as a bridge or node the portable computer or PDA or other means of the Technician or Maintenance worker (Technical Customer), for all operations for forwarding instructions to block the lifting plants and/or set off alarms mounted thereon.

The possibility of the CIMS system to connect to the **A³** event recording system for all download or upload operations necessary to store all the operating data of the lifting plant on a server for use by the black box via Internet, directly or using as a bridge or node the portable computer or PDA or other means of the Technician or Maintenance worker (Technical Customer).

The possibility of the CIMS system to connect to the **A³** event recording system for all necessary download or upload operations and also to record images and/or video footage of the lifting plants via the Internet, directly or using as a bridge or node the portable computer or PDA or other means of the Technician or Maintenance worker (Technical Customer).

Obviously modifications or improvements caused by contingent or particular reasons can be introduced to the invention as described herein above without thereby forsaking the ambit of the invention as claimed herein below.

## Claims

1. A process for detecting and using data concerning safety conditions of a plurality of cable or chain or hydraulic lifting apparatuses, or a combination thereof, each apparatus comprising a mobile hoist or other lifting system, to which a load holding element is connected, via a system of cables, the process comprising at least following stages:
- creating a remote server based system for managing a database with data concerning each apparatus and each owner thereof,
- detecting, by means of an accelerometer event recording system arranged on board of each lifting apparatus, data relating to movements of a load-holding element on at least an axis of a system of Cartesian coordinates (x,y,z) and/or data relating to single events or to archive-recorded series of lifting apparatus events,
- processing the data and sending the data to a remote server,
- allowing a protected access through the Internet to the remote server's database by the owner of the respective apparatus,
- processing the data in order to calculate a working-life of each lifting apparatus (SWP), using the capability to both upload and download data via Internet of the accelerometer event recording system adjusting through the Internet the preferences and settings of the accelerometer event recording system, and
- if required, generating one or more alarm signals and/or signals to halt a lifting apparatus if certain conditions relating to the working-life of the apparatus or to other events, and relevant to safety, are detected.

2. The process of claim 1, wherein recording of movements of the load-holding element is done in relation to three axes of a system of Cartesian coordinates (x,y,z).

3. The process of claim 1 or 2, wherein a further stage is provided for entering and transmitting data to the remote server, which data has been gathered by visually inspecting the lifting plant.

4. The process of claim 1 or 2, wherein it comprises a stage for uploading data or firmware from the remote server to an event recording system which is associated to a group of accelerometers.

5. The process of claim 4, wherein the connection between the event detection system on-board of each lifting apparatus and the remote server is direct, or takes place via a computer and/or PDA of a maintenance worker.

6. The process of claim 1 or 2, wherein the alarm generation stage comprises alarms which have been generated following events which the event detection system has detected instrumentally, and alarms which may be generated following interventions on each lifting apparatus which are scheduled at fixed deadlines by a manufacturer of each lifting apparatus.

7. The process of claim 1 or 2, wherein a stage is provided for periodically calculating conditions of use of each lifting apparatus in order to define a class of use of each lifting apparatus, in order to determine the working-life of each apparatus (SWP).

8. The process of claim 1, wherein a stage is provided where the owner can view all their lifting plants and relative details and the components which are the object of maintenance.

## Patentansprüche

1. Verfahren zum Detektieren und Verwendung von Daten betreffend Sicherheitsbedingungen einer Vielzahl von Kabel- oder Ketten- oder Hydraulikhebevorrichtungen oder einer Kombination davon, wobei jede Vorrichtung ein mobiles Hebezeug oder ein anderes Hebesystem umfasst, an dem ein Lasthalteelement verbunden ist, über ein System von Kabeln, wobei das Verfahren mindestens die folgenden Stufen umfasst:
- Erstellen eines Remote-Server-basierenden Systems zum Verwalten einer Datenbank mit Daten betreffend jede Vorrichtung und jeden Eigentümer davon,
- Erfassen, mittels eines an Bord einer jeden Hebevorrichtung angeordneten Beschleunigungsmesser-Ereignisaufzeichnungssystems, von Daten in Bezug auf Bewegungen eines Lasthalteelements an mindestens einer Achse eines Systems von kartesischen Koordinaten (x, y, z) und/oder Daten in Bezug auf Einzelereignisse oder zur Archivierung aufgenommener Serien von Hebevorrichtungsereignissen,
- Verarbeiten der Daten und Senden der Daten an einen Remote-Server,
- Ermöglichen eines geschützten Zugangs über das Internet zu der Datenbank des Remote-Servers durch den Eigentümer der entsprechenden Vorrichtung,
- Verarbeiten der Daten, um eine Arbeitslebensdauer jeder Hebevorrichtung (SWP) zu berechnen,
- Verwenden der Fähigkeit des Beschleunigungsmesser-Ereignisaufzeichnungssystems, Daten über das Internet sowohl hochzuladen als auch herunterzuladen, wobei über das Internet die Präferenzen und Einstellungen des Beschleunigungsmesser-Ereignisaufzeichnungssystems angepasst werden, und
- falls erforderlich, Erzeugen eines oder mehrerer Alarmsignale und/oder Signale, um eine Hebevorrichtung anzuhalten, falls bestimmte Bedingungen, die die Arbeitslebensdauer der Vorrichtung oder andere Ereignisse betreffen und sicherheitsrelevant sind, detektiert werden.

2. Verfahren gemäß Anspruch 1, wobei die Erfassung von Bewegungen des Lasthalteelements in Bezug auf drei Achsen eines Systems von kartesischen Koordinaten (x, y, z) durchgeführt wird.

3. Verfahren gemäß Anspruch 1 oder 2, wobei eine weitere Stufe zur Eingabe und Übertragung von Daten an den Remote-Server vorgesehen ist, wobei diese Daten durch visuelle Inspektion der Hebeanlage gesammelt worden sind.

4. Verfahren gemäß Anspruch 1 oder 2, wobei dieses eine Stufe für das Hochladen von Daten oder Firmensoftware von dem Remote-Server an ein Ereignisaufzeichnungssystem umfasst, welches einer Gruppe von Beschleunigungsmessern zugeordnet ist.

5. Verfahren gemäß Anspruch 4, wobei die Verbindung zwischen dem Ereignisdetektionssystem an Bord von jeder Hebevorrichtung und dem Remote-Server direkt ist oder über einen Computer und/oder über ein PDA eines Wartungsarbeiters erfolgt.

6. Verfahren gemäß Anspruch 1 oder 2, wobei die Alarmerzeugungsstufe Alarme umfasst, die in Folge von Ereignissen erzeugt worden sind, die das Ereignisdetektionssystem instrumentell erkannt hat, und Alarme umfasst, die in Folge von Eingriffen an jeder Hebevorrichtung erzeugt sein können, die an festen Fristen durch einen Hersteller jeder Hubvorrichtung geplant sind.

7. Verfahren gemäß Anspruch 1 oder 2, wobei eine Stufe für die in regelmäßigen Abständen berechneten Bedingungen zur Verwendung von jeder Hebevorrichtung vorgesehen ist, um eine Klasse der Verwendung jeder Hebevorrichtung zu definieren, um die Arbeitslebensdauer jeder Vorrichtung (SWP) zu bestimmen.

8. Verfahren gemäß Anspruch 1, wobei eine Stufe vorgesehen ist, in der der Eigentümer alle Hebeanlagen und diesbezügliche Details und die Komponenten, die Gegenstand einer Wartung sind, sehen kann.

## Revendications

1. Procédé de détection et d'utilisation de données concernant les conditions de sécurité d'une pluralité d'appareils de levage à câble ou à chaîne ou hydraulique ou une combinaison de ceux-ci, chaque appareil comprenant un palan mobile ou un autre système de levage auquel un élément de maintien de charge est relié, au moyen de un système de câbles, le procédé comprenant au moins les étapes suivantes:
- créer un système basé sur un serveur distant pour gérer une base de données avec des données concernant chaque appareil et chaque propriétaire de celui-ci,
- détecter, au moyen d'un système d'enregistrement d'événement accélérométrique disposé à bord de l'appareil de levage, des données relatives aux mouvements d'un élément de maintien de charge sur au moins un axe d'un système de coordonnées cartésiennes (x, y, z) et/ou de données concernant des événements isolés ou des séries enregistrées d'enregistrements d'événements d'appareils de levage,
- traiter les données et envoyer les données à un serveur distant,
- permettre un accès protégé par Internet à la base de données du serveur distant par le propriétaire de l'appareil respectif,
- traiter les données pour calculer la durée de vie utile de l'appareil de levage (SWP),
- utilisation de la capacité de télécharger des données via Internet du système d'enregistrement d'événements accélérométriques,
- ajustement par Internet des préférences et des réglages du système d'enregistrement des événements de l'accéléromètre, et
- si nécessaire, générer un ou plusieurs signaux d'alarme et/ou signaux pour arrêter l'appareil de levage si certaines conditions relatives à la durée de vie de l'appareil ou à d'autres événements et concernant la sécurité sont détectées.

2. Procédé selon la revendication 1, **caractérisé en ce que** l'enregistrement des mouvements de l'élément de chargement est effectué par rapport à trois axes d'un système de coordonnées cartésiennes (x, y, z).

3. Procédé selon la revendication 1 ou 2, dans lequel est en outre prévu une étape d'insertion et transmission des données vers le serveur distant, données qui ont été détecté par inspection visuelle de l'installation de levage.

4. Procédé selon la revendication 1 ou 2, dans lequel est en outre prévu une étape de téléchargement de données ou de micrologiciel depuis le serveur distant vers un système de détection d'événement associée audit groupe d'accéléromètres.

5. Procédé selon la revendication 4, **caractérisé en ce que** la connexion entre le système de détection d'événements à bord de chaque appareil de levage et le serveur distant est directe ou se fait par l'intermédiaire d'un ordinateur et/ou un PDA d'un travailleur d'entretien.

6. Procédé selon la revendication 1 ou 2, dans lequel l'étage de génération d'alarme comprend des alarmes qui ont été générées suite à des événements détectés par le système de détection d'événements et des alarmes qui peuvent être générées suite à des interventions sur l'appareil de levage qui sont prévues à des dates fixes par un fabricant de chaque appareil de levage.

7. Procédé selon la revendication 1 ou 2, dans lequel est prévu une étape de calcul périodique des conditions d'utilisation de chaque appareil de levage afin de définir la classe d'utilisation de chaque appareil de levage par rapport à la détermination de la durée de vie utile (SWP) de chaque appareil.

8. Procédé selon la revendication 1, **caractérisé en ce que** l'on prévoit un étage où le propriétaire peut visualiser toutes ses appareil de levage et les détails relatifs et les composants qui font l'objet de l'entretien.
